# FASCICULE DE BREVET EUROPEEN

(11) **EP 2 329 546 B1**
(45) Date de publication et mention de la délivrance du brevet: **21.11.2012**
(21) Numéro de dépôt: 09817277.8
(22) Date de dépôt: 17.09.2009
(51) Int. Cl.: H01M 2/02, H01M 2/04, H01M 2/36, H01M 10/0525

(54) **ACCUMULATEUR A ELECTROLYTE LIQUIDE ET PROCEDE DE REMPLISSAGE**
BATTERIE MIT FLÜSSIGELEKTROLYT UND FÜLLVERFAHREN DAFÜR
LIQUID-ELECTROLYTE STORAGE BATTERY AND FILLING PROCESS

(30) Priorité: 30.09.2008 FR 0805380
(43) Date de publication de la demande: 08.06.2011
(73) Titulaire: Commissariat à l'Énergie Atomique et aux Énergies Alternatives, 75015 Paris (FR); Centre National de la Recherche Scientifique, 75794 Paris Cedex 16 (FR)
(72) Inventeur: GIROUD, Nelly, F-38100 Grenoble (FR); JOST, Pierre, F-38220 Vizille (FR); ROUAULT, Hélène, F-38420 Le Versoud (FR)
(74) Mandataire: Dubreu, Sandrine
(86) Numéro de dépôt international: PCT/EP2009/062074
(87) Numéro de publication internationale: WO 2010/037640

(56) Documents cités:
- EP-A- 0 994 519
- GB-A- 200 731
- GB-A- 295 516
- JP-A- 60 246 557
- US-A- 1 376 923
- US-A- 1 823 448
- US-A- 4 061 163
- US-A- 4 695 519
- US-B1- 6 588 460

## Description

### Domaine technique de l'invention

L'invention concerne un accumulateur à électrolyte liquide comportant un boîtier constitué par une face supérieure, une face inférieure et une paroi latérale délimitant une cavité, la face supérieure comportant un orifice d'injection d'électrolyte.

Un autre objet de l'invention concerne un procédé de remplissage d'un tel accumulateur à électrolyte liquide.

### État de la technique

Les accumulateurs sont en général constitués d'une électrode positive, d'une électrode négative et d'une solution d'électrolyte. Afin d'augmenter leur performance, les électrodes sont généralement assemblées sous forme d'un corps d'électrodes constitué d'un empilement d'électrodes positives et négatives, un séparateur étant intercalé entre chaque électrode positive et négative. Ce corps est disposé à l'intérieur d'un accumulateur et imprégné d'une solution d'électrolyte nécessaire à la réaction électrochimique. Une mauvaise imprégnation des constituants, c'est-à-dire une imprégnation qui n'est pas réalisée sur la totalité des surfaces des électrodes et des séparateurs, ou de façon non homogène, peut entraîner une diminution importante des performances de l'accumulateur allant jusqu'à 50 % de leur capacité.

Les documents GB-A-200731 et US-A-1823448 décrivent un boîtier de batterie d'accumulateur comportant des moyens de drainage de l'électrolyte qui permettent d'éliminer les sédiments accumulés dans la batterie lors du remplacement de l'électrolyte. Les moyens de drainage comportent un orifice latéral de drainage dont le bord inférieur est en contact avec la face inférieure constituant le fond de la batterie.

Dans le cas d'un accumulateur lithium-ion, la solution d'électrolyte utilisée est une solution liquide, obtenue en dissolvant un sel de lithium (Li) formant des ions Li dans un mélange de solvant organique. Or, les solvants organiques sont très volatils et inflammables, ce qui augmente les risques de fuite des accumulateurs. Récemment, de nouveaux électrolytes à base de liquide ionique ont été développés pour diminuer les risques de feu et d'explosion. Néanmoins, ces solutions d'électrolytes ioniques présentent une viscosité plus importante. L'imprégnation des électrodes positives et négatives est alors plus difficile du fait de la faible mouillabilité du solvant ionique.

De façon conventionnelle, les accumulateurs lithium-ion à remplir sont disposés dans une chambre de dépression. Le boîtier est alors rempli par injection de la solution d'électrolyte liquide au travers d'un orifice situé sur le couvercle du boîtier de l'accumulateur.

D'autres procédés de remplissage ont également été développés pour améliorer les performances des accumulateurs. Plus particulièrement, le document US-B-6387561 décrit un procédé de remplissage d'une structure de batterie secondaire au lithium avec une solution d'électrolyte non-aqueuse. Le corps d'électrodes est formé par enroulement autour d'un noyau central, d'électrodes positives et d'électrodes négatives, isolées par un séparateur. Le procédé comporte l'injection d'une quantité prédéterminée d'une solution d'électrolyte organique à l'intérieur du boîtier par l'intermédiaire d'un trou, traversant le noyau central, afin d'immerger le corps d'électrodes. Puis, la solution d'électrolyte en excès est extraite. La solution d'électrolyte est injectée et extraite au moyen d'une aiguille. Dans le cas d'une batterie de grande dimension, ce procédé nécessite des quantités importantes de solution d'électrolyte. De plus, dans le cas de solution d'électrolyte ionique avec une faible mouillabilité, la mise en contact de la solution d'électrolyte avec les couches d'électrodes n'est pas suffisante pour imprégner celles-ci.

De même, le document US-A-5849431 divulgue un procédé de remplissage d'une batterie secondaire au lithium avec une solution d'électrolyte non-aqueuse. La batterie est reliée à un réservoir externe contenant la solution d'électrolyte non-aqueuse et à une pompe à vide. Le procédé comporte la mise sous vide de l'intérieur du boîtier et, en raison de la différence de pression entre le réservoir et le boîtier de la batterie, la migration de la solution dans le boîtier. Cette opération est réalisée à plusieurs reprises pour remplir le boîtier. Ces opérations successives augmentent le risque de fuites de la solution lors de son transfert du réservoir vers l'intérieur du boîtier et également lors de la mise sous vide de l'intérieur du boîtier de la batterie, plus particulièrement, pour des solutions d'électrolyte organique très volatiles et inflammables. Ce procédé de remplissage surconsomme également la solution d'électrolyte.

### Objet de l'invention

L'invention a pour but de proposer un accumulateur à électrolyte liquide ainsi qu'un procédé de remplissage d'un tel accumulateur avec une solution d'électrolyte liquide remédiant aux inconvénients de l'art antérieur.

En particulier, l'invention a pour but de proposer un accumulateur à électrolyte liquide et son procédé de remplissage, adaptés aux accumulateurs de grande dimension et à tout type de solution d'électrolyte liquide, notamment aux solutions ioniques. L'invention a également pour but un procédé simple, facile à mettre en oeuvre, peu coûteux, présentant peu de risques de fuite et améliorant les performances énergétiques massique et volumique des accumulateurs.

Selon l'invention, ce but est atteint par un accumulateur à électrolyte liquide selon les revendications indexées.

Plus particulièrement, ce but est atteint par le fait qu'un orifice latéral est formé dans une zone inférieure de la paroi latérale du boîtier et par le fait qu'une zone réservoir est délimitée par la face inférieure, la paroi latérale et un plan (A) parallèle à la face inférieure et passant par le bord inférieur de l'orifice latéral. De plus, une cavité délimitée par la face supérieure, la face inférieure et la paroi latérale du boîtier, contient un corps d'électrodes dont au moins une partie est située dans ladite zone réservoir.

Avantageusement, l'accumulateur est un accumulateur lithium-ion.

L'invention concerne également un procédé de remplissage d'un tel accumulateur à électrolyte liquide comportant successivement :
- la fermeture, par un opercule, de l'orifice d'injection d'électrolyte,
- l'actionnement d'une pompe à vide reliée à l'orifice latéral jusqu'à ce que la pression à l'intérieur de la cavité atteigne une valeur prédéterminée inférieure à la pression atmosphérique,
- la fermeture de l'orifice latéral,
- une première injection d'une première quantité prédéterminée de solution d'électrolyte liquide à travers l'opercule,
- après une durée prédéterminée, la connexion de l'orifice latéral à la pression atmosphérique,
- une seconde injection d'une seconde quantité de solution d'électrolyte liquide à travers l'opercule, pour remplir au moins partiellement d'électrolyte liquide la zone réservoir du boîtier située au-dessous de l'orifice latéral et,
- l'obturation définitive de l'orifice d'injection d'électrolyte et de l'orifice latéral.

Avantageusement, le procédé de remplissage est utilisé pour des accumulateurs lithium-ion.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 représente une vue en perspective d'un accumulateur à électrolyte liquide.
- La figure 2 représente, schématiquement et en coupe transversale, un accumulateur à électrolyte liquide.
- Les figures 3 à 5 représentent, en vue de dessus, un mode de réalisation particulier d'un dispositif de remplissage d'un accumulateur selon les figures 1 et 2, dans des étapes successives d'un procédé de remplissage selon l'invention.
- Les figures 6 à 10 représentent, schématiquement et en coupe transversale selon l'axe BB, les étapes suivantes du procédé de remplissage.

### Description des modes de réalisation particuliers de l'invention

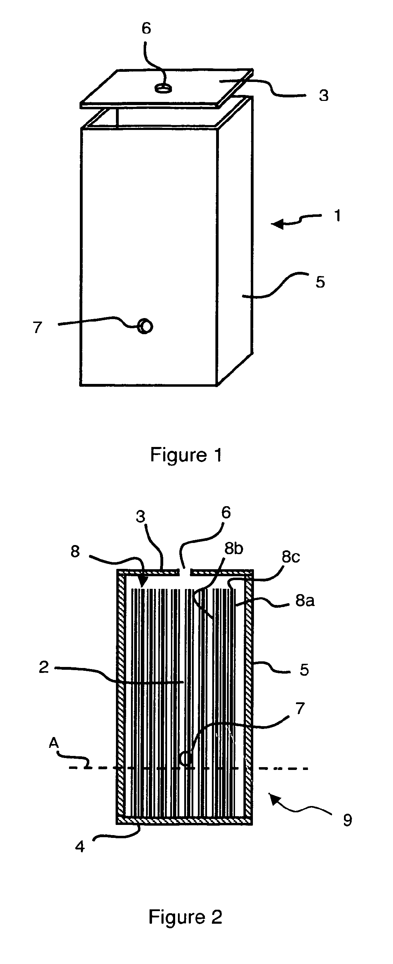

Selon un mode de réalisation particulier, un accumulateur lithium-ion à électrolyte liquide, illustré à titre d'exemple aux figures 1 et 2, comporte un boîtier 1 constitué par une face supérieure 3, une face inférieure 4 et une paroi latérale 5 délimitant une cavité 2. Le boîtier 1 est, avantageusement, un boîtier de grande taille, ayant un volume de la cavité 2 supérieur à 100 cm³. Le boîtier 1 comporte deux orifices, un orifice d'injection d'électrolyte 6 dans la face supérieure 3 (en haut des figures 1 et 2) et un orifice latéral 7 formé dans une zone inférieure de la paroi latérale 5 (en bas des figures 1 et 2). Par zone inférieure, on entend la partie de l'accumulateur située sous la ligne médiane partageant par moitié la partie haute du boîtier 1 de la partie basse du boîtier 1.

Comme illustré à la figure 2, la cavité 2 contient un corps d'électrodes 8 qui peut être, par exemple, constitué d'un enroulement d'électrodes alternativement positives et négatives, 8a et 8b, isolées les unes des autres par un séparateur 8c. Le corps d'électrodes 8 est disposé à proximité de la paroi latérale 5 et repose en partie basse sur la face inférieure 4. L'électrode positive 8a est, de préférence, à base d'oxyde de métal de transition lithié, supporté par un feuillard d'aluminium (non représenté) et l'électrode négative 8b est à base de matériau carboné, supporté par un feuillard de cuivre (non représenté). Par exemple, les couples d'électrodes positive et négative, 8a et 8b, utilisés peuvent être LiNiCoAlO₂ /LiC₆, LiFePO₄ /LiC₆, ou LiFePO₄ /Li₄Ti₅O₁₂.

Le séparateur 8c peut être un film microporeux en polyéthylène ou en polypropylène. Lors du fonctionnement d'un accumulateur lithium-ion, les réactions électrochimiques responsables de la charge et de la décharge de l'accumulateur, se déroulent au niveau des électrodes uniquement en présence d'une solution d'électrolyte liquide. La solution d'électrolyte liquide est le siège d'échanges ioniques et véhicule ces ions à travers le séparateur 8c. La performance de l'accumulateur, plus particulièrement, la densité d'énergie massique et volumique, dépendra donc en partie de la qualité de l'imprégnation du corps d'électrodes 8. En effet, une imprégnation partielle a pour conséquence de limiter les performances en puissance des accumulateurs lithium-ion. La solution d'électrolyte liquide est obtenue en dissolvant un électrolyte formant des ions lithium, généralement un sel de lithium, soit dans un solvant organique soit dans un liquide ionique. Par rapport aux solvants organiques, les liquides ioniques qui sont des sels organiques présentent l'avantage d'être non-inflammables, non volatiles et très stables. Les solutés ioniques utilisés sont, par exemple, des sels de complexe de fluorure de lithium tels que le lithium hexafluorophosphate (LiPF₆) ou du lithium bis(trifluorométhane sulfone)imide (LiTFSI), en solution dans un liquide ionique composé d'un cation imididazonium, pipéridinium ou pyrrolidinium. A titre d'exemple, on peut utiliser :
- comme cation imidazolium, le1-butyl-3-méthylimidazolium tétrafluoroborate, ou le 1-butyl-3-méthylimidazolium bis(trifluorométhanesulfonyle)imidure,
- comme cation pipéridinium, le N,N-propyl-méthyl pipéridinium bis(trifluorométhane sulfonyle)imidure (PP₁₃TFSI) et,
- comme cation pyrrolidinium, le N,N-propyl-méthyl pyrrolidinium bis(trifluorométhane sulfonyle)imidure.

Le boîtier 1 comporte, en partie basse du boîtier (en bas des figures 1 et 2), une zone réservoir 9, destinée à recevoir une quantité déterminée de solution d'électrolyte liquide. Cette zone réservoir 9 est délimitée par la face inférieure 4, la paroi latérale 5 et un plan A parallèle à la face inférieure 4 et passant par le bord inférieur de l'orifice latéral 7. Cette zone résevoir 9 est dimensionnée pour pouvoir contenir entre 5% et 25% du volume total du boîtier 1, de préférence 10%. L'orifice latéral 7 est disposé de façon à ajuster la taille de la zone réservoir 9 en fonction des dimensions externes du boîtier 1.

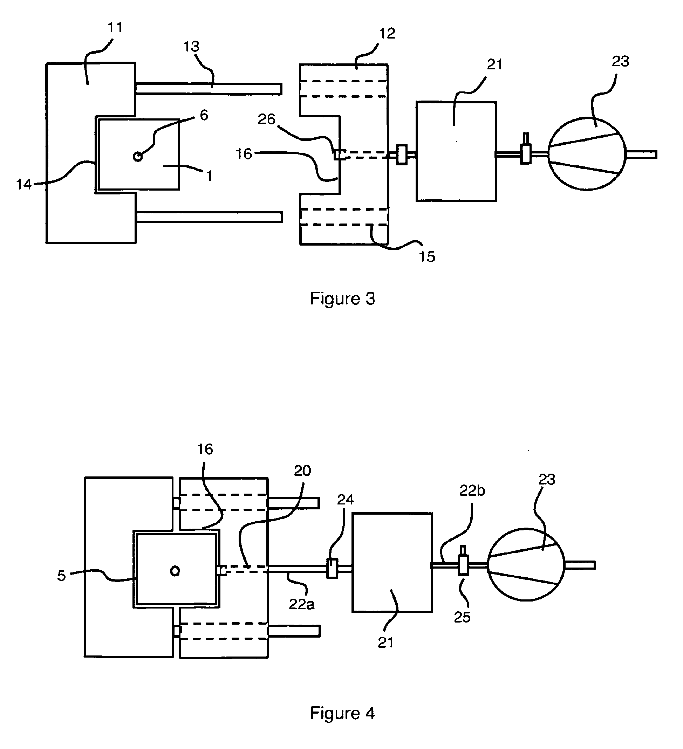

Cet accumulateur à électrolyte liquide est, de préférence, rempli d'une solution d'électrolyte liquide selon un procédé de remplissage décrit ci-dessous, avantageusement, au moyen d'un dispositif représenté aux figures 3 à 10. Selon un mode de réalisation particulier, le dispositif comprend une partie fixe 11 et une partie mobile 12, coulissant le long de deux glissières 13, d'une position ouverte (figure 3) à une position fermée (figure 4). En position ouverte, comme représenté à la figure 3, le boîtier 1 est disposé dans un premier logement 14, ayant une forme complémentaire à au moins une partie du boîtier 1. La partie mobile 12 est engagée dans les deux glissières 13 par deux canons de guidage 15 et coulisse jusqu'à la position fermée (figure 4). Un second logement 16, situé sur la partie mobile 12, a une forme complémentaire à au moins une partie du boîtier 1, de sorte qu'une fois la partie mobile 12 en butée contre la partie fixe 11, le boîtier 1 soit maintenu en place.

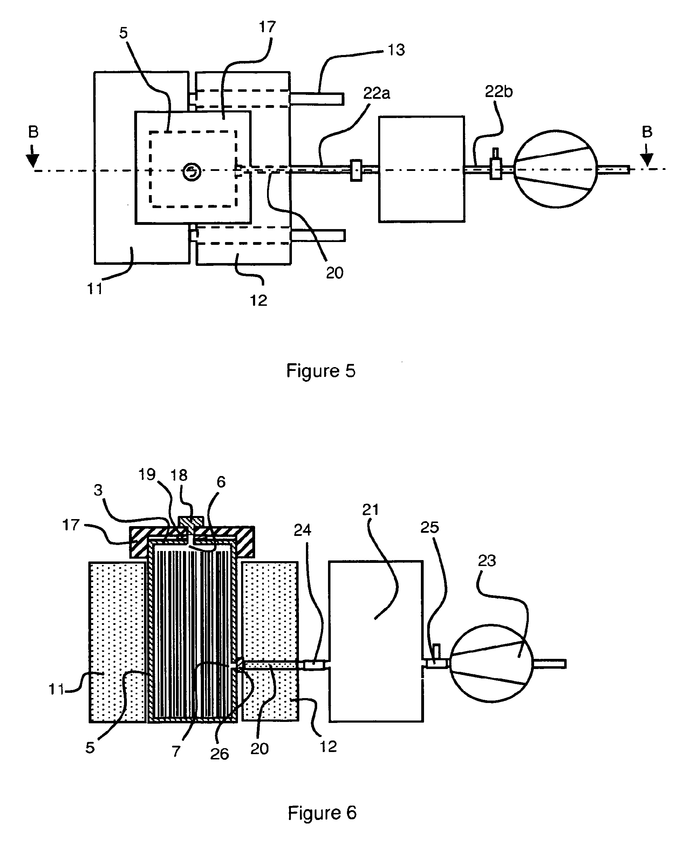

La partie supérieure du boîtier 1 (en haut sur la figure 6) dépasse alors des deux parties fixe et mobile, 11 et 12, jointes. Comme représenté à la figure 6, un capot 17, ayant une forme complémentaire à cette partie supérieure, peut alors être disposé sur la partie supérieure du boîtier 1, de façon à recouvrir la face supérieure 3. Les parties fixe et mobile, 11 et 12, et le capot 17 constituent, en position fermée, un logement de forme complémentaire du boîtier 1 et le maintiennent fixement. Le capot 17 comporte un orifice central bouché par un opercule 18.

Dans une variante non représentée, les parties fixe et mobile, 11 et 12, peuvent former avec le capot 17, un ensemble monobloc venant s'adapter sur le boîtier 1.

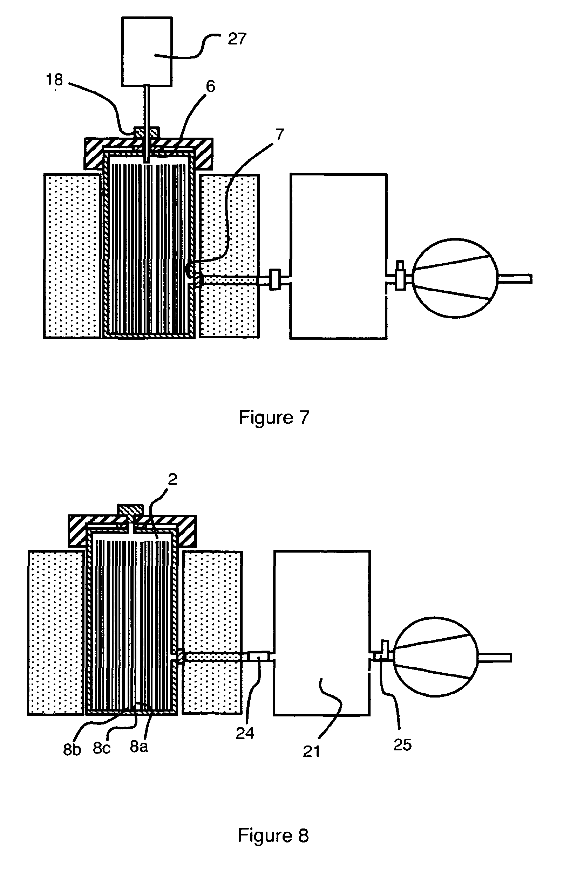

Comme représenté aux figures 5 et 6, l'orifice d'injection d'électrolyte 6 est positionné en haut du dispositif (en haut de la figure 6), vis à vis de l'opercule 18. L'opercule 18 est étanche à l'air et réalisé, de préférence, en matériau déformable, par exemple en silicone. Un premier joint d'étanchéité 19 est disposé entre le capot 17 et la face supérieure 3. L'opercule 18 associé au premier joint d'étanchéité 19 permet de fermer l'orifice d'injection d'électrolyte 6 de façon étanche. Une aiguille 27 peut, cependant, pénétrer dans la cavité 2 du boîtier 1 à travers l'opercule 18 et l'orifice d'injection d'électrolyte 6 (figure 7).

L'orifice latéral 7 est disposé dans l'axe d'un trou traversant 20 de la partie mobile 12, débouchant d'un côté dans le second logement 16 et de l'autre côté à l'extérieur du dispositif (figure 4).

L'orifice d'injection d'électrolyte 6 et l'orifice latéral 7 sont de petites dimensions, avantageusement circulaires, de diamètre inférieur ou égal à 2 mm afin de réduire les risques de fuite lors des différentes opérations de remplissage et également après remplissage, une fois obturés et scellés.

Un réservoir 21 est relié de manière étanche, par un premier conduit 22a, au trou traversant 20 et, par un second conduit 22b, à une pompe à vide 23. Les premier et second conduits, 22a et 22b, sont munis respectivement d'une valve 24 à deux voies et d'une valve 25 à trois voies, permettant de créer ou de rompre le vide. La valve 24 sert également à actionner l'ouverture et la fermeture du passage de la solution d'électrolyte liquide vers le réservoir 21. Le réservoir 21 permet de piéger la solution d'électrolyte liquide par tout procédé connu, par exemple, par refroidissement. La valve 25 peut également être reliée à une arrivée de gaz inerte, par exemple de l'azote ou de l'argon, pour purger la cavité 2. Un second joint d'étanchéité 26 est disposé entre la paroi latérale 5 du boîtier 1 et la paroi interne du second logement 16, autour de l'orifice latéral 7 (figure 6).

Ainsi, comme représenté à la figure 7, lorsque la valve 24 du premier conduit 22a est fermée, L'orifice latéral 7 est fermé de façon étanche. Les premier et second joints d'étanchéité, 19 et 26, sont avantageusement des joints résistants à la solution d'électrolyte liquide, par exemple, en caoutchouc de type joint "Viton".

Selon une variante, les parties fixe et mobile, 11 et 12, ainsi que le capot 17 peuvent être commandées automatiquement par des moyens automatiques, non illustrés, et gérées par un système logique. Les valves 24 et 25 peuvent être des valves électro-mécaniques actionnées par un régulateur logique programmable.

Comme illustré à la figure 6, le boîtier 1 est maintenu dans son logement par les parties fixe et mobile, 11 et 12, et le capot 17. L'orifice d'injection d'électrolyte 6 est alors fermé par l'opercule 18. La pompe à vide 23 est ensuite actionnée tandis que la valve 24 est ouverte et la valve 25 est mise dans une première position d'ouverture, dans laquelle le réservoir 21 est connecté à la pompe à vide 23. Il se crée ainsi une dépression dans la cavité 2 du boîtier 1. La pompe à vide 23 est arrêtée lorsque la pression atteint une valeur prédéterminée, inférieure à la pression atmosphérique. Cette pression est, avantageusement, comprise entre 100 et 300 mBar, de préférence égale à 200 mBar. Cette pression est définie en fonction de la tension de vapeur de la solution d'électrolyte.

Comme représenté à la figure 7, les valves 24 et 25 sont ensuite fermées. L'orifice latéral 7 est alors fermé de façon étanche. Une première quantité prédéterminée de solution d'électrolyte liquide est alors injectée à travers l'opercule 18, par l'orifice d'injection d'électrolyte 6, de préférence, à l'aide d'une aiguille 27. L'utilisation d'une aiguille 27 est avantageuse car elle permet un prélèvement aisé de la quantité exacte de liquide à injecter. L'aiguille 27 perce l'opercule 18, tout en maintenant la pression à l'intérieur de la cavité 2, inférieure à la pression atmosphérique. Sous l'effet de la dépression, la solution d'électrolyte liquide se vaporise et pénètre efficacement le corps d'électrodes 8. La vaporisation favorise la pénétration de l'électrolyte liquide ionique dans les pores des électrodes, 8a et 8b, et des séparateurs 8c. L'imprégnation s'effectue alors de façon homogène dans les couches d'électrodes externes mais également dans les couches internes du corps d'électrodes 8. La vaporisation de l'électrolyte liquide rétablit la pression atmosphérique dans la cavité 2. La quantité de solution d'électrolyte liquide injectée est fonction du volume du boîtier 1. La quasi-totalité du liquide injecté est, avantageusement, vaporisée. La dépression favorise l'imprégnation en améliorant la vaporisation pour un électrolyte liquide à base de solvant ou la diffusion pour un électrolyte liquide ionique.

Après une durée prédéterminée, comprise par exemple entre 2min et 30min, nécessaire à l'imprégnation des couches d'électrodes, 8a et 8b, et des séparateurs 8c, le réservoir 21 est mis sous pression atmosphérique par commutation de la valve 25. Le réservoir 21 est ensuite mis en communication avec la cavité 2 par ouverture de la valve 24 (figure 8). L'orifice latéral 7 est alors connecté à la pression atmosphérique mettant alors la cavité 2 à pression atmosphérique.

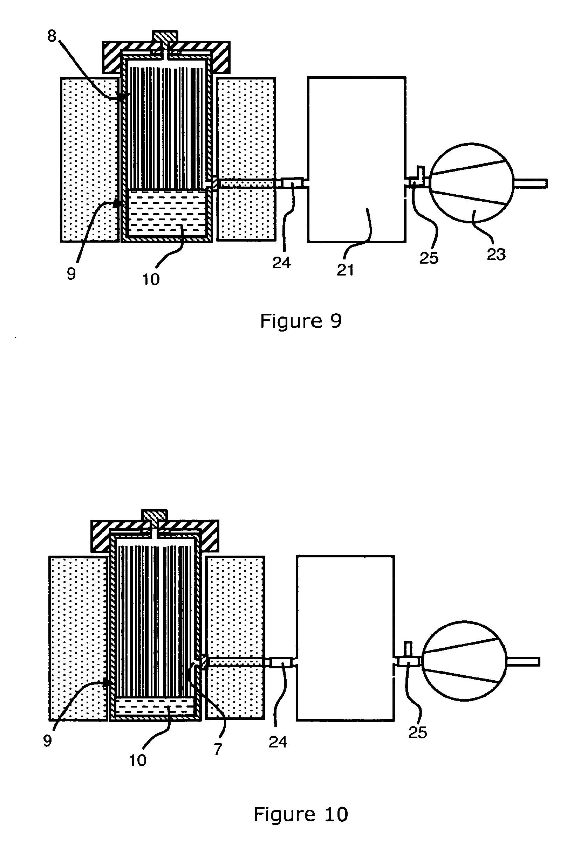

Une seconde quantité de solution d'électrolyte liquide est injectée par l'orifice d'injection d'électrolyte 6, à travers l'opercule 18 de façon identique à la première injection. La solution d'électrolyte liquide s'écoule alors jusqu'à la zone réservoir 9 située au-dessous de l'orifice latéral 7, qui se remplit progressivement. Le volume délimité par la zone réservoir 9 correspond au volume maximum nécessaire à l'imprégnation du corps d'électrodes 8. La partie inférieure du corps d'électrodes 8 (en bas de la figure 9) trempe dans la solution d'électrolyte liquide 10. La solution d'électrolyte 10 migre alors dans le corps d'électrodes 8 par capillarité et continue l'imprégnation. La première imprégnation de la solution d'électrolyte vaporisée, favorise la diminution des interactions entre la solution électrolyte liquide 10 et les parois des électrodes, 8a et 8b, et des séparateurs 8c. La migration de la solution d'électrolyte 10 s'effectue alors plus facilement à l'intérieur du corps d'électrodes 8. Cet effet est particulièrement marqué pour les solutions d'électrolyte liquide ionique, visqueuses et peu mouillables.

Ce procédé est particulièrement avantageux pour les solutions d'électrolyte liquide ayant une viscosité supérieure à 100 centipoise (cP) soit 0,1 Pa.s ou pour des solutions d'électrolyte liquide présentant un angle de contact avec le corps d'électrodes 8 compris entre 35° et 70°.

A titre d'exemple, pour le remplissage d'un accumulateur lithium-ion à couple électrochimique graphite/phosphate, avec une solution d'électrolyte liquide ionique PP₁₃TFSI, comportant du LiTFSI à une concentration de 1,6 mol.l⁻¹ avec 5% en volume de vinyl éthylène carbonate et un boîtier de 100 cm³ : 30 cm³ d'une première quantité de solution d'électrolyte liquide ionique est injectée. Après 15min, une seconde quantité de solution d'électrolyte liquide ionique de 10 cm³ est injectée à pression atmosphérique. Selon ce procédé de remplissage, le boîtier 1 d'accumulateur est remplit en environ 15min.

Avantageusement, la première quantité de solution d'électrolyte liquide correspond à une valeur comprise entre 45% et 95%, de préférence 75%, de la quantité totale de solution d'électrolyte liquide 10 injectée.

Selon une variante (figure 10), les première et seconde injections de solution d'électrolyte liquide 10 remplissent partiellement la zone réservoir 9.

Selon une autre variante, lors de la première injection, la quantité de solution d'électrolyte liquide injectée n'est vaporisée que partiellement. Le liquide non vaporisé est alors collecté dans la zone réservoir 9 et la remplit partiellement. La seconde injection de solution d'électrolyte complète alors la zone réservoir 9.

Lorsque le volume de la seconde quantité de solution d'électrolyte liquide est supérieur au volume de la zone réservoir 9, l'excès de solution d'électrolyte liquide injectée est évacuée par l'orifice latéral 7 (à droite sur la figure 9) vers le réservoir 21.

Après un temps prédéterminé nécessaire à la migration de la solution au sein du corps d'électrodes 8, l'excès de solution d'électrolyte liquide peut, avantageusement, être éliminé en mettant, de nouveau, la cavité 2 sous vide par commutation des valves 24 et 25 (figure 10).

La qualité de l'imprégnation favorise l'échange ionique même dans les couches internes de l'empilement d'électrodes, 8a et 8b, et a pour effet une stabilité des performances de l'accumulateur.

L'orifice d'injection d'électrolyte 6 et l'orifice latéral 7 sont ensuite obturés de façon étanche et définitive, selon tout procédé connu.

En variante, le procédé de remplissage peut comporter plus de deux injections successives de solution d'électrolyte liquide.

Selon une autre variante, dans le cas de solution d'électrolyte liquide ionique, très visqueuse, la création de la dépression dans le boîtier 1 et la première injection de solution d'électrolyte liquide peuvent être effectuées simultanément. Ainsi, grâce à la dépression, la migration de la solution d'électrolyte liquide est alors favorisée.

Le procédé de remplissage décrit précédemment permet d'imprégner les accumulateurs, de préférence de grande taille, selon un procédé simple, peu coûteux et rapide. En effet, pour la mise en oeuvre du procédé, il n'est pas nécessaire d'utiliser un dispositif comportant une chambre de dépression puisque seule la cavité 2 de l'accumulateur est mise sous vide. La quantité de solution d'électrolyte liquide injectée peut être prédéfinie afin d'être limitée uniquement au volume nécessaire. Les volumes de solution d'électrolyte et de gaz inerte nécessaire au remplissage des boîtiers d'accumulateur sont, par conséquent, beaucoup moins importants que dans des procédés conventionnels. Le coût et le temps de remplissage sont réduits. L'accumulateur à électrolyte liquide et le procédé de la présente invention conviennent particulièrement aux accumulateurs lithium-ion utilisant des solutions d'électrolyte liquide ionique non volatiles et non inflammables. Ils permettent de minimiser les risques de fuite et d'obtenir des accumulateurs fiables, sécurisés tout en maintenant des performances élevées.

## Revendications

1. Accumulateur à électrolyte liquide comportant un boîtier (1) constitué par une face supérieure (3), une face inférieure (4) et une paroi latérale (5) délimitant une cavité (2), la face supérieure (3) comportant un orifice d'injection d'électrolyte (6) et un orifice latéral (7) formé dans une zone inférieure de la paroi latérale (5) **caractérisé en ce qu'**une zone réservoir (9) est délimitée par la face inférieure (4), la paroi latérale (5) et un plan (A) parallèle à la face inférieure (4) et passant par le bord inférieur de l'orifice latéral (7) et **en ce que** la cavité (2) contient un corps d'électrodes (8) dont au moins une partie est située dans ladite zone réservoir (9).

2. Accumulateur selon la revendication 1, **caractérisé en ce que** la zone réservoir (9) est dimensionnée pour pouvoir contenir entre 5% et 25% du volume total du boîtier (1).

3. Procédé de remplissage d'un accumulateur selon l'une des revendications 1 et 2, **caractérisé en ce qu'**il comporte successivement :
- la fermeture, par un opercule (18), de l'orifice d'injection d'électrolyte (6),
- l'actionnement d'une pompe à vide (23) reliée à l'orifice latéral (7) jusqu'à ce que la pression à l'intérieur de la cavité (2) atteigne une valeur prédéterminée, inférieure à la pression atmosphérique,
- la fermeture de l'orifice latéral (7),
- une première injection d'une première quantité prédéterminée de solution d'électrolyte liquide à travers l'opercule (18),
- après une durée prédéterminée, la connexion de l'orifice latéral (7) à la pression atmosphérique,
- une seconde injection d'une seconde quantité de solution d'électrolyte liquide à travers l'opercule (18), pour remplir au moins partiellement d'électrolyte liquide la zone réservoir (9) du boîtier (1) située au-dessous de l'orifice latéral (7) et,
- l'obturation définitive de l'orifice d'injection d'électrolyte (6) et de l'orifice latéral (7).

4. Procédé de remplissage selon la revendication 3, **caractérisé en ce que** la solution d'électrolyte liquide a une viscosité supérieure à 0,1 Pa.s.

5. Procédé de remplissage selon l'une des revendications 3 et 4, **caractérisé en ce que**, la cavité (2) contenant un corps d'électrodes (8), la solution d'électrolyte liquide (10) présente un angle de contact avec le corps d'électrodes (8) compris entre 35° et 70°.

6. Procédé de remplissage selon l'une quelconque des revendications 3 à 5, **caractérisé en ce que** ladite pression à l'intérieur de la cavité (2) est comprise entre 100 et 300 mBar.

7. Procédé de remplissage selon la revendication 6, **caractérisé en ce que** la pression à l'intérieur de la cavité (2) est égale à 200 mBar.

8. Procédé de remplissage selon l'une quelconque des revendications 3 à 7, **caractérisé en ce que**, les première et seconde injections sont réalisées à l'aide d'une aiguille (27) à travers l'opercule (18) en matériau déformable.

## Claims

1. A liquid electrolyte storage battery comprising a battery case (1) consisting of a top wall (3), a bottom wall (4) and a side wall (5) delineating a cavity (2), the top wall (3) comprising an electrolyte injection hole (6) and a lateral hole (7) formed in a bottom area of the side wall (5) **characterized in that** a tank area (9) is delineated by the bottom wall (4), the side wall (5) and a plane (A) parallel to the bottom wall (4) and passing via the lower edge of the lateral hole (7) and **in that** the cavity (2) contains a body of electrodes (8), of which at least a part is located in said tank area (9).

2. The storage battery according to claim 1, **characterized in that** the tank area (9) is dimensioned to be able to contain between 5% and 25% of the total volume of the battery case (1).

3. A method for filling a storage battery according to one of claims 1 and 2, **characterized in that** it successively comprises:
- closing the electrolyte injection hole (6) off by means of a sealing cap (18),
- actuating a vacuum pump (23) connected to the lateral hole (7) until the pressure inside the cavity (2) reaches a predetermined value lower than atmospheric pressure,
- closing the lateral hole (7),
- a first injection of a first predetermined quantity of liquid electrolyte solution through the sealing cap (18),
- after a predetermined time, connection of the lateral hole (7) to atmospheric pressure,
- a second injection of a second quantity of liquid electrolyte solution through the sealing cap (18) to at least partially fill with liquid electrolyte the tank area (9) of the battery case (1) situated below the lateral hole (7) and,
- sealing off definitively the electrolyte injection hole (6) and the lateral hole (7).

4. The filling method according to claim 3, **characterized in that** the liquid electrolyte solution has a viscosity of more than 0.1 Pa.s.

5. The filling method according to one of claims 3 and 4, **characterized in that** the cavity (2) containing a body of electrodes (8), the liquid electrolyte solution (10) presents a contact angle with the body of electrodes (8) comprised between 35° and 70°.

6. The filling method according to any one of claims 3 to 5, **characterized in that** said pressure inside the cavity (2) is comprised between 100 and 300 mbar.

7. The filling method according to claim 6, **characterized in that** the pressure inside the cavity (2) is equal to 200 mbar.

8. The filling method according to any one of claims 3 to 7, **characterized in that** the first and second injections are performed by means of a needle (27) through the sealing cap (18) made from deformable material.

## Patentansprüche

1. Flüssigkeitselektrolyt-Batterie mit einem Gehäuse (1), das eine Oberseite (3), eine Unterseite (4) und eine Seitenwand (5) aufweist, welche einen Hohlraum (2) umgrenzen, wobei die Oberseite (3) eine Elektrolyt-Einspritzöffnung (6) aufweist und eine seitliche Öffnung (7) in einem unteren Bereich der Seitenwand (5) gebildet ist,
**dadurch gekennzeichnet,**
**dass** ein Reservoirbereich (9) von der Unterseite (4), der Seitenwand (5) und einer Ebene (A), die parallel zur Unterseite (4) und am unteren Rand der seitlichen Öffnung (7) vorbei verläuft, umgrenzt wird, und dass der Hohlraum (2) einen Elektrodenkörper (8) enthält, der sich zumindest mit einem Teil in dem genannten Reservoirbereich (9) befindet.

2. Batterie nach Anspruch 1,
**dadurch gekennzeichnet,**
**dass** der Reservoirbereich (9) so bemessen ist, dass er zwischen 5 % und 25 % des Gesamtvolumens des Gehäuses (1) enthalten kann.

3. Verfahren zum Füllen einer Batterie nach einem der Ansprüche 1 und 2, **dadurch gekennzeichnet,**
**dass** es aufeinander folgend umfasst:
- Verschließen der Elektrolyt-Einspritzöffnung (6) mittels eines Deckels (18),
- Betätigen einer Vakuumpumpe (23), die mit der seitlichen Öffnung (7) verbunden ist, bis der Druck im Hohlraum (2) einen vorbestimmten Wert erreicht, der unter dem atmosphärischen Druck liegt,
- Verschließen der seitlichen Öffnung (7),
- ein erstes Einspritzen einer ersten vorbestimmten Menge Flüssigkeitselektrolyt-I-ösung durch den Deckel (18),
- nach einer vorbestimmten Dauer Anschließen der seitlichen Öffnung (7) an den atmosphärischen Druck,
- ein zweites Einspritzen einer zweiten vorbestimmten Menge Flüssigkeitselektrolyt-Lösung durch den Deckel (18), um den Reservoirbereich (9) des Gehäuses (1), der sich unterhalb der seitlichen Öffnung (7) befindet, zumindest teilweise mit Flüssigkeitselektrolyt zu füllen, und
- endgültiges Verschließen der Elektrolyt-Einspritzöffnung (6) und der seitlichen Öffnung (7).

4. Füllverfahren nach Anspruch 3,
**dadurch gekennzeichnet,**
**dass** die Flüssigkeitselektrolyt-Lösung eine Viskosität von mehr als 0,1 Pa.s. aufweist.

5. Füllverfahren nach einem der Ansprüche 3 und 4,
**dadurch gekennzeichnet,**
**dass**, indem der Hohlraum (2) einen Elektrodenkörper (8) enthält, die Flüssigkeitselektrolyt-Lösung (10) einen Kontaktwinkel mit dem Elektrodenkörper (8) aufweist, der zwischen 35° und 70° beträgt.

6. Füllverfahren nach einem der Ansprüche 3 bis 5,
**dadurch gekennzeichnet,**
**dass** der genannte Druck im Hohlraum (2) zwischen 100 und 300 mBar beträgt.

7. Füllverfahren nach Anspruch 6,
**dadurch gekennzeichnet,**
**dass** der Druck im Hohlraum (2) 200 mBar beträgt.

8. Füllverfahren nach einem der Ansprüche 3 bis 7,
**dadurch gekennzeichnet,**
**dass** das erste und das zweite Einspritzen mit Hilfe einer Nadel (27) durch den Deckel (18) aus verformbarem Material erfolgt.
